# EUROPÄISCHE PATENTSCHRIFT

(11) **EP 3 710 345 B1**
(45) Veröffentlichungstag und Bekanntmachung des Hinweises auf die Patenterteilung: **18.01.2023**
(21) Anmeldenummer: 18789322.7
(22) Anmeldetag: 14.09.2018
(51) Int. Cl.: B62J 1/12, B62J 1/04, B62J 35/00, B62J 9/25

(54) **SITZBANKANORDNUNG FÜR EIN MOTORRAD**
SEAT BENCH ARRANGEMENT FOR A MOTORCYCLE
ENSEMBLE SIÈGE POUR UNE MOTOCYCLETTE

(30) Priorität: 13.11.2017 DE 102017220119
(43) Veröffentlichungstag der Anmeldung: 23.09.2020
(73) Patentinhaber: Bayerische Motoren Werke Aktiengesellschaft, 80809 München (DE)
(72) Erfinder: GOLLING, Adrian, 82194 Gröbenzell (DE); MÜHLMANN, Mathias, 82140 Olching (DE)
(86) Internationale Anmeldenummer: PCT/EP2018/074848
(87) Internationale Veröffentlichungsnummer: WO 2019/091632

(56) Entgegenhaltungen:
- DE-U1-202004 017 603
- FR-A1- 2 760 714
- JP-A- 2015 174 553
- US-A- 2 330 341
- US-A1- 2016 046 344

## Beschreibung

Die Erfindung betrifft eine Sitzbankanordnung für ein Motorrad gemäß dem Oberbegriff des Patentanspruchs 1 sowie ein entsprechend ausgestattetes Motorrad gemäß dem Oberbegriff des Patentanspruchs 12.

Bei bekannten Motorrädern ist eine Sitzbank für einen oder mehrere Nutzer in einer Längsrichtung des Motorrades meist hinter dem Kraftstofftank angeordnet. Die Sitzbank ist über separate Sitzbanklager mit der Fahrzeugstruktur, dem Hauptrahmen des Motorrades, verbunden und üblicherweise klappbar ausgeführt, so dass die Sitzbank um eine an einem vorderen Ende der Sitzbank angeordnete Drehachse aufgeklappt werden kann. Auf diese Weise wird ein unter der Sitzbank vorgesehener Stauraum zugänglich, in welchem Gepäck oder ein Schutzhelm im Bedarfsfall verstaut werden können.

Meist ist der Bauraum in diesem Bereich jedoch sehr knapp, da die Sitzbanklager einerseits mit der Sitzbank und andererseits mit dem Fahrzeugrahmen verbunden werden müssen, ohne jedoch mit dem Tank zu kollidieren. Gleichzeitig müssen sie ausreichend dimensioniert sein, um eine ausreichend stabile Verbindung mit der Fahrzeugstruktur bereitzustellen.

Der Kraftstofftank selbst ist üblicherweise mit einem eigenen Tanklager an der Fahrzeugstruktur befestigt.

Weitere Sitzbank- und Tankanordnungen sind unter anderem aus der JP 2015 174553 A, US 2016/046344 A1, US 2 330 341 A, DE 20 2004 017603 U1 und FR 2 760 714 A1 bekannt. Die JP 2015 174553 A offenbart eine Sitzbankanordnung nach dem Oberbegriff des Anspruchs 1.

Eine Aufgabe der Erfindung ist es, eine verbesserte Verbindung der Sitzbank mit der Fahrzeugstruktur zu schaffen, welche möglichst die genannten Nachteile zumindest reduziert.

Diese Aufgabe wird gelöst mit einer Sitzbankanordnung gemäß dem Gegenstand des Patentanspruchs 1, sowie einem Motorrad mit den Merkmalen des

Patentanspruchs 12. Vorteilhafte Ausführungsformen ergeben sich aus den jeweils abhängigen Ansprüchen.

Demnach wird eine Sitzbankanordnung für ein Motorrad bereitgestellt, mit
- einer Tankblase,
- einem Tanklager, welches zum Verbinden der Tankblase mit einer Fahrzeugstruktur ausgebildet ist, und
- einer Sitzbank zur Aufnahme eines Motorradnutzers,
wobei die Sitzbank mit dem Tanklager verbunden ist, so dass das Tanklager ein Lager zum Abstützen der Sitzbank bildet. Außerdem umfasst das Tanklager einen ersten Verbindungsabschnitt, der zum Verbinden mit der Tankblase ausgebildet ist, und einen zweiten Verbindungsabschnitt, wobei die

Sitzbank mittels eines der Sitzbank zugeordneten dritten Verbindungsabschnitts mit dem zweiten Verbindungsabschnitt des Tanklagers verbunden ist, wobei der erste Verbindungsabschnitt formschlüssig mit der Tankblase verbunden ist, und wobei das Tanklager im Bereich des ersten Verbindungsabschnitts Ausnehmungen und/oder Hinterschneidungen aufweist, in die sich bei einer Herstellung der Tankblase unter Verwendung eines Blasprozesses die Tankblase zur Bildung des Formschlusses hinein erstreckt.

Dies bedeutet, dass das Tanklager einerseits zum Verbinden der Tankblase mit der Fahrzeugstruktur ausgebildet ist und andererseits aber auch als Lager für die Sitzbank dient. Als Tankblase ist insbesondere ein einen Hohlraum definierendes Behältnis zu verstehen, in welchem beispielsweise ein Kraftstoff zum Betrieb des Motorrades mitgeführt werden kann. Die Tankblase kann entweder ein Tankbehältnis, welches zumindest teilweise durch eine zusätzliche Verkleidung umhüllt wird, oder aber ein nicht-verkleideter Tank sein.

Das Tanklager ist im verbauten Zustand also nicht nur mit der Fahrzeugstruktur sondern zusätzlich mit der Sitzbank verbunden, so dass die Sitzbank über das Tanklager an der Fahrzeugstruktur gelagert ist. Das Tanklager bildet somit im verbauten Zustand die (mittelbare) Verbindung zwischen beiden Komponenten. Dies bietet den großen Vorteil, dass zumindest im Bereich des Tanklagers auf ein entsprechendes Sitzbanklager verzichtet werden kann, da dieses bereits im Tanklager integriert ist. Ein für die Befestigung aller Komponenten erforderlicher Bauraum kann auf diese Weise erheblich reduziert und somit eine Funktionsintegration erzielt werden. Es versteht sich, dass die Sitzbank dennoch weitere Sitzbanklager insbesondere in hiervon beabstandeten Abschnitten der Sitzbank aufweisen kann.

Neben der beschrieben vorteilhaften Funktionsintegration wird auf diese Weise außerdem eine verbesserte Passgenauigkeit erzielt. So werden die bei bisherigen Lösungen mit separatem Sitzbanklager nur mit hohem Aufwand zu handhabenden Toleranzen umgangen, die sich durch teils breite und unregelmäßige Fugen zwischen dem Tank und der Sitzbank störend bemerkbar machen. Stattdessen wird durch die Verbindung von Tanklager und Sitzbank eine exakte Positionierung zueinander festgelegt, so dass eine hohe Passgenauigkeit sichergestellt werden kann.

Wie beschrieben umfasst das Tanklager einen ersten Verbindungsabschnitt, der zum Verbinden mit der Tankblase ausgebildet ist, und einen zweiten Verbindungsabschnitt, wobei die Sitzbank mittels eines der Sitzbank zugeordneten dritten Verbindungsabschnitt mit dem zweiten Verbindungsabschnitt des Tanklagers verbunden ist.

Optional kann der dritte Verbindungsabschnitt drehbar mit dem zweiten Verbindungsabschnitt des Tanklagers verbunden sein, um die Sitzbank drehbeweglich mit dem Tanklager zu verbinden. Dies ermöglicht, die Sitzbank im Bedarfsfalle in eine geöffnete Position aufzuklappen und einen unter der Sitzbank angeordneten Stauraum zugänglich zu machen. Umgekehrt kann die Sitzbank zur Nutzung des Motorrades aus der geöffneten Position wieder in eine geschlossene Position zugeklappt werden.

Des Weiteren ist - wie bereits beschrieben - der erste Verbindungabschnitt des Tanklagers formschlüssig mit der Tankblase verbunden. Entsprechend weist im Falle der formschlüssigen Verbindung das Tanklager im Bereich des ersten Verbindungsabschnitts Ausnehmungen und/oder Hinterschneidungen auf, so dass sich bei einer Herstellung der Tankblase unter Verwendung eines Blasprozesses die Tankblase entsprechend in diese Elemente hinein erstreckt, um somit den Formschluss zu erzeugen. So kann zur Herstellung eines Blasformtanks, welcher das Tanklager und die Tankblase umfasst, das Tanklager beispielsweise als ein einzelnes Spritzgussbauteil bereitgestellt werden und in ein Spritzgusswerkzeug zur Durchführung des Blasprozesses eingelegt werden.

Auf diese Weise wird im Rahmen des Blasprozesses bereits eine Verbindung zwischen dem Tanklager und der Tankblase erzeugt, beispielsweise über einen oder mehrere Formschlüsse zwischen der Tankblase und dem Tanklager.

Gemäß einer Ausführungsform kann der zweite Verbindungsabschnitt eine Aufnahme und der dritte Verbindungsabschnitt eine Lagerwelle umfassen, wobei die Lagerwelle in der Aufnahme angeordnet, vorzugsweise lösbar und/oder drehbeweglich angeordnet, ist. Dies bedeutet, dass die Lagerwelle der Sitzbank zugeordnet ist und in der Aufnahme angeordnet und gehalten wird. Ist diese Verbindung zudem lösbar ausgebildet, kann die Sitzbank im Bedarfsfall leicht entnommen werden, ohne eine umfangreiche Demontage zu erfordern. Im Falle einer alternativen oder zusätzlichen drehbeweglichen Ausgestaltung kann die beschriebene Klappbarkeit der Sitzbank bereitgestellt werden.

Gemäß einer alternativen Ausführungsform kann der zweite Verbindungabschnitt eine Lagerwelle und der dritte Verbindungsabschnitt eine Aufnahme umfassen, wobei die Lagerwelle in der Aufnahme angeordnet, vorzugsweise lösbar und/oder drehbeweglich angeordnet, ist.

In diesem Fall ist die Lagerwelle dem Tanklager und die Aufnahme der Sitzbank zugeordnet. Auch in dieser Ausführungsform ermöglicht die lösbare Ausgestaltung eine leichte und einfache Entnahme der Sitzbank. Mit der alternativen oder zusätzlichen Drehbeweglichkeit wird ebenfalls eine drehbare Verbindung der Sitzbank mit dem Tanklager bereitgestellt, die ein Aufklappen und Herunterklappen in gleicher Weise erlaubt.

In jedem der Fälle kann die jeweilige Aufnahme als Ausnehmung, Hinterschneidung, und/oder mit einem U-förmigen Querschnitt zum Aufnehmen, vorzugsweise zum lösbaren und/oder drehbeweglichen Aufnehmen, der Lagerwelle ausgebildet sein. Auf diese Weise kann ein Formschluss bereitgestellt werden, der im Bedarfsfall zum Entfernen der Sitzbank gelöst werden kann. Die Aufnahme ermöglicht es in jeder der beschriebenen Ausführungsformen die Sitzbank gegenüber dem Tanklager zu zentrieren und eine exakte und reproduzierbare Position in einer Fahrzeuglängsrichtung und einer Fahrzeugbreitenrichtung sicherzustellen.

Ebenfalls unabhängig von der Ausführungsform kann die Lagerwelle ein oder mehrere auf der Lagerwelle angeordnete Lagerelemente, insbesondere elastische Sitzbankpuffer, umfassen. Die Lagerelemente sind beispielsweise zwischen der Lagerwelle und der Aufnahme angeordnet. Im Falle einer elastischen Ausbildung dienen die Lagerelemente zusätzlich als Dämpfung, um eine Übertragung von Schwingungen und Stößen von dem Fahrzeug über das Tanklager auf die Sitzbank zumindest zu reduzieren. Hierzu können die Sitzbankpuffer beispielsweise aus Gummi oder einem anderen elastischen Material gefertigt sein.

Zum Beispiel sind die Lagerelemente hierzu jeweils zylinderförmig ausgebildet und koaxial zu einer Symmetrieachse der Lagerwelle angeordnet.

Für eine zusätzliche Dämpfungswirkung kann außerdem das Tanklager entkoppelt beziehungsweise schwingungsgedämpft, beispielsweise über zwischengeordnete Puffer, mit der Fahrzeugstruktur verbunden sein. In der lediglich optionalen Kombination mit den elastischen Sitzbankpuffern kann somit eine zweistufige Dämpfung erzielt werden.

Außerdem kann der zweite Verbindungsabschnitt auf einer von dem ersten Verbindungsabschnitt abgewandten Seite des Tanklagers angeordnet sein. Dies bedeutet, dass in einer Fahrzeuglängsrichtung das Tanklager hinter der Tankblase und die Sitzbank wiederum im Wesentlichen hinter dem Tanklager angeordnet sind. Entsprechend ist der erste Verbindungsabschnitt in Richtung der Tankblase gewandt, um eine Verbindung mit dieser bereitzustellen. Der zweite Verbindungsabschnitt weist dagegen in die entgegengesetzte Richtung, also in Richtung der Sitzbank.

Beispielsweise ist der dritte Verbindungsabschnitt in einem vorderen, dem Tanklager beziehungsweise der Tankblase zugewandten Bereich der Sitzbank angeordnet.

Ebenfalls beispielsweise sind der erste und/oder der zweite Verbindungsabschnitt einstückig mit dem Tanklager ausgebildet. Es wird auf diese Weise eine besonders kompakte und funktionsintegrierte Einheit, das Tanklager, erzielt. Beispielsweise kann das Tanklager als Spritzgussbauteil hergestellt sein, so dass sich die beiden Verbindungsabschnitte auf einfache Weise in diesem einen Bauteil integrieren lassen.

Des Weiteren kann das Tanklager außerdem einen Befestigungsabschnitt, vorzugsweise mindestens eine Öse, umfassen, welcher zum Befestigen eines Gepäckbehältnisses an dem Tanklager in einem Bereich oberhalb der Tankblase ausgebildet ist. Dies bietet die Möglichkeit, dass das Tanklager neben der Verbindung mit der Sitzbank außerdem auch zum Verbinden mit dem Gepäckbehältnis ausgebildet ist. Zum Beispiel kann das Gepäckbehältnis ein Tankrucksack oder ein ähnliches Behältnis sein.

Außerdem wird ein Motorrad mit einer Sitzbankanordnung bereitgestellt, wobei die Sitzbankanordnung gemäß der Beschreibung ausgebildet ist, und wobei das Tanklager mit der Fahrzeugstruktur fest verbunden ist.

Das beschriebene Tanklager und die dadurch ermöglichte Sitzbankanordnung bieten den Vorteil, dass das Tanklager als lediglich ein einzelnes Bauteil ausgestaltet ist und bis zu drei integrierte Funktionen vorgesehen werden können. So sind die Befestigung des Tanks an der Fahrzeugstruktur, die Befestigung der Sitzbank und ein integrierter Halter für den Tankrucksack vorgesehen. Auf diese Weise kann eine verbesserte Nutzung des ohnehin sehr knappen Bauraums erfolgen. Dies ermöglicht darüber hinaus die Einsparung von Kosten und Gewicht. Ein weiterer Vorteil wird dadurch erzielt, dass die Sitzbank gegenüber bekannten Verbindungsanordnungen in doppelter Weise von der Fahrzeugstruktur entkoppelt und gedämpft ist, so dass dadurch eine deutliche Verbesserung einer Dämpfung von Vibrationsbelastung des Nutzers erzielt werden kann.

Als Motorrad sind im Rahmen dieser Beschreibung nicht nur Motorräder als solche sondern auch motorradähnliche Fahrzeuge zu verstehen, insbesondere alle Einspurfahrzeuge aber auch Mehrspurfahrzeuge jeweils mit entsprechender sattelförmiger Sitzbank für den Nutzer, besonders bevorzugt zweirädrige, dreirädrige oder vierrädrige Motorroller und Scooter, aber auch Quads.

Die Erfindung wird nachfolgend anhand zweier Ausführungsformen unter Bezugnahme auf die Zeichnungen näher beschrieben. Es zeigen:
- Fig. 1: eine Seitenansicht einer Sitzbankanordnung gemäß der Beschreibung,
- Fig. 2: eine erste Ausführungsform der Sitzbankanordnung in einer perspektivischen Detailansicht, und
- Fig. 3: eine zweite Ausführungsform der Sitzbankanordnung in einer perspektivischen Detailansicht.

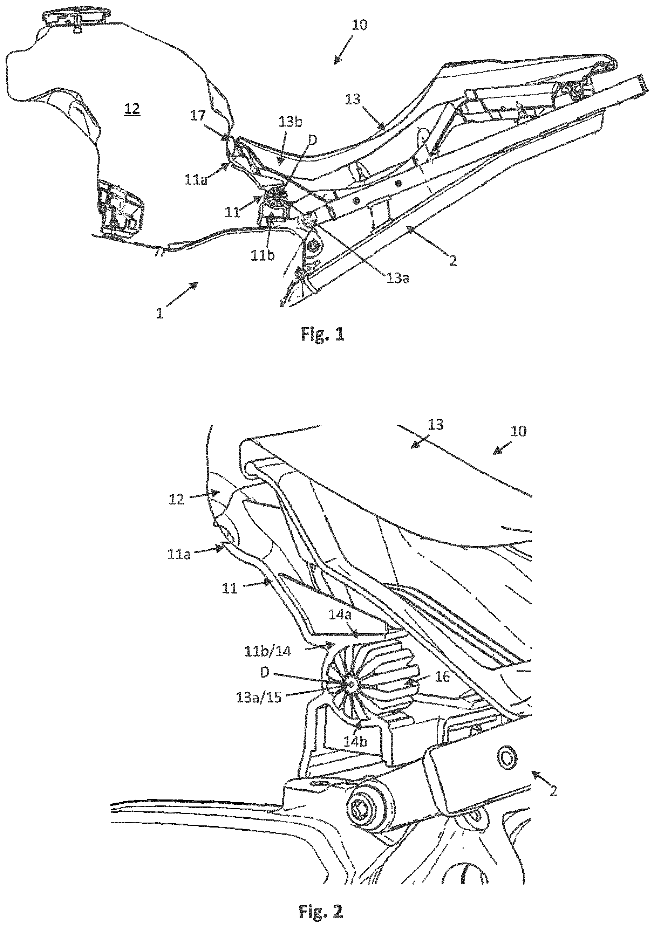

Fig. 1 zeigt in einer Seitenansicht eine erste Ausführungsform einer Sitzbankanordnung 10 für ein Motorrad 1. Das Motorrad 1 selbst ist nicht in Gesamtheit dargestellt, sondern lediglich ein Teil einer Fahrzeugstruktur 2 des Motorrades 1. Die Sitzbankanordnung 10 umfasst eine Tankblase 12 und ein Tanklager 11, welches zum Verbinden der Tankblase 12 mit der Fahrzeugstruktur 2 ausgebildet ist. Die Tankblase 12 kann entweder ein Tankbehältnis sein, welches zusätzlich zumindest teilweise durch eine zusätzliche Verkleidung umhüllt wird, oder aber ein nicht-verkleideter Tank.

Des Weiteren umfasst die Sitzbankanordnung 10 eine Sitzbank 13 zur Aufnahme eines Motorradnutzers (nicht dargestellt), wobei die Sitzbank 13 mit dem Tanklager 11 verbunden ist, sodass das Tanklager 11 ein Lager zum Abstützen der Sitzbank 13 bildet. Das Tanklager 11 umfasst einen ersten Verbindungsabschnitt 11a, der zum Verbinden mit der Tankblase 12 ausgebildet ist, und einen zweiten Verbindungsabschnitt 11b, wobei die Sitzbank 13 mittels eines der Sitzbank 13 zugeordneten dritten Verbindungsabschnitts 13a mit dem zweiten Verbindungsabschnitt 11b des Tanklagers 11 verbunden ist. Vorzugsweise ist der dritte Verbindungsabschnitt 13a drehbar mit dem zweiten Verbindungsabschnitt 11b des Tanklagers 11 verbunden, um die Sitzbank 13 drehbeweglich mit dem Tanklager 11 zu verbinden.

Der zweite Verbindungsabschnitt 11b ist auf einer von dem ersten Verbindungsabschnitt 11a abgewandten Seite des Tanklagers 11 angeordnet. Für eine möglichst kompakte Ausgestaltung können optional der erste 11a und/oder der zweite Verbindungsabschnitt 11b einstückig mit dem Tanklager 11 ausgebildet sein. Vorzugsweise sind beide, also der erste 11a und der zweite Verbindungsabschnitt 11b, einstückig mit dem Tanklager 11 ausgeführt. Außerdem ist der erste Verbindungsabschnitt 11a des Tanklagers 11 formschlüssig mit der Tankblase 12 verbunden.

Dagegen ist der dritte Verbindungsabschnitt 13a in einem dem Tanklager 11 zugewandten, vorderen Bereich 13b der Sitzbank 13 angeordnet. Vorzugsweise ist der dritte Verbindungabschnitt 13b außerdem unterhalb einer Sitzoberfläche der Sitzbank 13 positioniert.

In Fig. 2 ist die erste Ausführungsform der Sitzbankanordnung 10 aus Fig. 1 in einer perspektivischen Detailansicht dargestellt.

Hierbei umfasst der zweite Verbindungsabschnitt 11b eine Aufnahme 14 und der dritte Verbindungsabschnitt 13a eine Lagerwelle 15, wobei die Lagerwelle 15 in der Aufnahme 14 bei Bedarf lösbar und zusätzlich drehbeweglich angeordnet ist. Die Lagerwelle 15 definiert vorzugsweise die Drehachse D, um welche die Sitzbank 13 gedreht beziehungsweise geschwenkt werden kann. Die lösbare Verbindung wird hier beispielhaft durch Einsetzen der Lagerwelle 15 in die Aufnahme 14 erzielt.

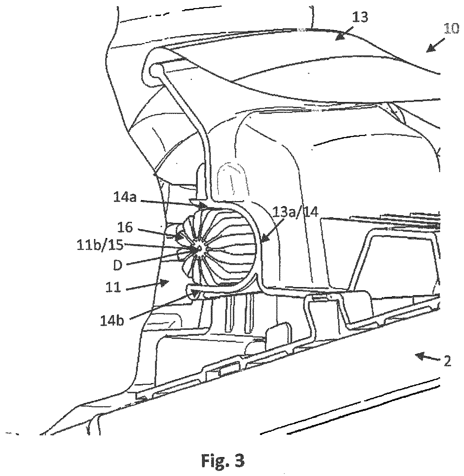

Fig. 3 zeigt eine zweite Ausführungsform der Sitzbankanordnung 10 in einer perspektivischen Detailansicht mit umgekehrter Anordnung. Hierbei umfasst der zweite Verbindungabschnitt 11b eine Lagerwelle 15 und der dritte Verbindungsabschnitt 13a eine Aufnahme 14, wobei die Lagerwelle 15 in der Aufnahme 14 ebenfalls lösbar und zusätzlich drehbeweglich angeordnet ist. Auch in diesem Fall definiert die Lagerwelle 15 vorzugsweise die Drehachse D, um welche die Sitzbank 13 gedreht beziehungsweise geschwenkt werden kann. Die lösbare Verbindung wird auch hier beispielhaft durch Einsetzen der Lagerwelle 15 in die Aufnahme 14 erzielt.

In beiden Ausführungsformen gemäß Fig. 1, 2 und 3 umfasst die jeweilige Aufnahme 14 einen im Wesentlichen U-förmigen Querschnitt, so dass zwischen zwei Schenkeln 14a,14b des U-förmigen Querschnitts ein Aufnahmeraum definiert ist, der zum Aufnehmen der Lagerwelle 15 ausgebildet ist. Aufgrund der Form der Aufnahme 14 ist diese leicht lösbar ausgebildet, da die Lagerwelle 15 leicht in die Aufnahme 14 eingesetzt und aus dieser wieder entfernt werden kann. Zusätzlich bietet die geometrische Ausgestaltung der Aufnahme 14 die Möglichkeit der Drehbarkeit.

Hierzu sind gemäß der erste Ausführungsform (Fig. 1 und 2) die beiden Schenkel 14a,14b in Fahrzeuglängsrichtung beziehungsweise in Richtung der Sitzbank 13 ausgerichtet, so dass eine Öffnung ebenfalls in diese Richtung weist. Die Sitzbank 13 kann somit einfach mit dem Tanklager 11 verbunden werden, indem die Lagerwelle 15 in die Öffnung eingeführt wird und dadurch innerhalb des durch den U-förmigen Querschnitt definierten Aufnahmeraums der Aufnahme 14 platziert wird.

In der zweiten Ausführungsform (Fig. 3) ist dagegen die Aufnahme 14 der Sitzbank 13 zugeordnet. Dementsprechend sind in diesem Fall die beiden Schenkel 14a,14b des ebenfalls U-förmigen Querschnitts in Fahrzeuglängsrichtung beziehungsweise in Richtung des Tanklagers 11 ausgerichtet. Die Sitzbank 13 wird somit durch Aufsetzen der U-förmigen Aufnahme auf die Lagerwelle 15 mit dem Tanklager 11 verbunden. Die Öffnung des U-förmigen Querschnitts ist also im Wesentlichen in Fahrzeuglängsrichtung beziehungsweise in Richtung des Tanklagers 11 und des Tanks 12 orientiert.

In jedem Fall kann die Lagerwelle 15 eine oder mehrere auf der Lagerwelle 15 angeordnete Lagerelemente 16, insbesondere elastische Sitzbankpuffer, umfassen. Die Lagerelemente 16 sind hierbei im Wesentlichen jeweils zylinderförmig ausgebildet und koaxial zu einer Symmetrieachse der Lagerwelle 15 angeordnet, wobei längs gerichtete Ausnehmungen einen sternförmigen Querschnitt der Lagerelemente 16 bilden. Die Lagerelemente 16 ermöglichen so eine wirkungsvolle Dämpfungsfunktion zur Reduktion einer Schwingungsübertragung von dem restlichen Motorrad auf die Sitzbank 13.

Wie in Fig. 1 lediglich schematisch angedeutet, kann das Tanklager 11 optional außerdem einen Befestigungsabschnitt 17 umfassen, der beispielsweise als eine oder mehrere Ösen ausgebildet und zum Befestigen eines Gepäckbehältnis (nicht dargestellt) an dem Tanklager 11 in einem Bereich oberhalb der Tankblase 12 ausgebildet ist.

## Patentansprüche

1. Sitzbankanordnung (10) für ein Motorrad (1), mit
- einer Tankblase (12),
- einem Tanklager (11), welches zum Verbinden der Tankblase (12) mit einer Fahrzeugstruktur (2) ausgebildet ist, und
- einer Sitzbank (13) zur Aufnahme eines Motorradnutzers, wobei die Sitzbank (13) mit dem Tanklager (11) verbunden ist, sodass das Tanklager (11) ein Lager zum Abstützen der Sitzbank (13) bildet, wobei das Tanklager (11) einen ersten Verbindungsabschnitt (11a), der zum Verbinden mit der Tankblase (12) ausgebildet ist, und einen zweiten Verbindungsabschnitt (11b) umfasst, wobei die Sitzbank (13) mittels eines der Sitzbank (13) zugeordneten dritten Verbindungsabschnitts (13a) mit dem zweiten Verbindungsabschnitt (11b) des Tanklagers (11) verbunden ist,
**dadurch gekennzeichnet, dass** der erste Verbindungsabschnitt (11a) formschlüssig mit der Tankblase (12) verbunden ist, wobei das Tanklager (11) im Bereich des ersten Verbindungsabschnitts (11a) Ausnehmungen und/oder Hinterschneidungen aufweist, in die sich bei einer Herstellung der Tankblase (12) unter Verwendung eines Blasprozesses die Tankblase (12) zur Bildung des Formschlusses hinein erstreckt.

2. Sitzbankanordnung (10) nach Anspruch 1, **dadurch gekennzeichnet, dass** der dritte Verbindungsabschnitt (13a) drehbar mit dem zweiten Verbindungsabschnitt (11b) des Tanklagers (11) verbunden ist, um die Sitzbank (13) drehbeweglich mit dem Tanklager (11) zu verbinden.

3. Sitzbankanordnung (10) nach einem der Ansprüche 1 bis 2, **dadurch gekennzeichnet, dass** der zweite Verbindungsabschnitt (11b) eine Aufnahme (14) und der dritte Verbindungsabschnitt (13a) eine Lagerwelle (15) umfasst, wobei die Lagerwelle (15) in der Aufnahme (14) angeordnet, vorzugsweise lösbar und/oder drehbeweglich angeordnet, ist.

4. Sitzbankanordnung (10) nach einem der Ansprüche 1 bis 2, **dadurch gekennzeichnet, dass** der zweite Verbindungabschnitt (11b) eine Lagerwelle (15) und der dritte Verbindungsabschnitt (13a) eine Aufnahme (14) umfasst, wobei die Lagerwelle (15) in der Aufnahme (14) angeordnet, vorzugsweise lösbar und/oder drehbeweglich angeordnet, ist.

5. Sitzbankanordnung (10) nach einem der Ansprüche 3 bis 4, **dadurch gekennzeichnet, dass** die jeweilige Aufnahme (14) als Ausnehmung, Hinterschneidung, und/oder mit einem U-förmigen Querschnitt zum Aufnehmen, vorzugsweise zum lösbaren und/oder drehbeweglichen Aufnehmen, der Lagerwelle (15) ausgebildet ist.

6. Sitzbankanordnung (10) nach einem der Ansprüche 3 bis 5, **dadurch gekennzeichnet, dass** die Lagerwelle (15) ein oder mehrere auf der Lagerwelle (15) angeordnete Lagerelemente (16), insbesondere elastische Sitzbankpuffer, umfasst.

7. Sitzbankanordnung (10) nach Anspruch 6, **dadurch gekennzeichnet, dass** die Lagerelemente (16) jeweils zylinderförmig ausgebildet und koaxial zu einer Symmetrieachse der Lagerwelle (15) angeordnet sind.

8. Sitzbankanordnung (10) nach einem der Ansprüche 1 bis 7, **dadurch gekennzeichnet, dass** der zweite Verbindungsabschnitt (11b) auf einer von dem ersten Verbindungsabschnitt (11a) abgewandten Seite des Tanklagers (11) angeordnet ist.

9. Sitzbankanordnung (10) nach einem der Ansprüche 1 bis 8, **dadurch gekennzeichnet, dass** der erste (11a) und/oder der zweite Verbindungsabschnitt (11b) einstückig mit dem Tanklager (11) ausgebildet sind.

10. Sitzbankanordnung (10) nach einem der Ansprüche 1 bis 9, **dadurch gekennzeichnet, dass** das Tanklager (11) außerdem einen Befestigungsabschnitt (17), vorzugsweise mindestens eine Öse, umfasst, welcher zum Befestigen eines Gepäckbehältnis an dem Tanklager (11) in einem Bereich oberhalb der Tankblase (12) ausgebildet ist.

11. Sitzbankanordnung (10) nach einem der Ansprüche 1 bis 10, **dadurch gekennzeichnet, dass** der dritte Verbindungsabschnitt (13a) in einem dem Tanklager (11) zugewandten, vorderen Bereich (13b) der Sitzbank (13) angeordnet ist.

12. Motorrad (1) mit einer Sitzbankanordnung (10), **dadurch gekennzeichnet, dass** die Sitzbankanordnung (10) gemäß einem der Ansprüche 1 bis 11 ausgebildet ist und das Tanklager (11) mit der Fahrzeugstruktur (2) fest verbunden ist.

## Claims

1. Seat bench arrangement (10) for a motorcycle (1), with
- a fuel cell (12),
- a tank mounting (11) which is configured to connect the fuel cell (12) to a vehicle structure (2), and
- a seat bench (13) for receiving a motorcycle user, the seat bench (13) being connected to the tank mounting (11), with the result that the tank mounting (11) forms a mounting for supporting the seat bench (13), the tank mounting (11) comprising a first connecting portion (11a), which is configured for connection to the fuel cell (12), and a second connecting portion (11b), the seat bench (13) being connected to the second connecting portion (11b) of the tank mounting (11) by means of a third connecting portion (13a) which is assigned to the seat bench (13), **characterized in that** the first connecting portion (11a) is connected in a positively locking manner to the fuel cell (12), the tank mounting (11) having, in the region of the first connecting portion (11a), recesses and/or undercuts, into which the fuel cell (12) extends in order to form the positively locking connection in the case of a production of the fuel cell (12) using a below-moulding process.

2. Seat bench arrangement (10) according to Claim 1, **characterized in that** the third connecting portion (13a) is connected rotatably to the second connecting portion (11b) of the tank mounting (11), in order to connect the seat bench (13) to the tank mounting (11) in a rotationally movable manner.

3. Seat bench arrangement (10) according to either of Claims 1 or 2, **characterized in that** the second connecting portion (11b) comprises a receptacle (14) and the third connecting portion (13a) comprises a mounting shaft (15), the mounting shaft (15) being arranged in the receptacle (14), preferably being arranged in a releasable and/or rotationally movable manner.

4. Seat bench arrangement (10) according to either of Claims 1 or 2, **characterized in that** the second connecting portion (11b) comprises a mounting shaft (15) and the third connecting portion (13a) comprises a receptacle (14), the mounting shaft (15) being arranged in the receptacle (14), preferably being arranged in a releasable and/or rotationally movable manner.

5. Seat bench arrangement (10) according to either of Claims 3 or 4, **characterized in that** the respective receptacle (14) is configured as a recess, undercut, and/or with a U-shaped cross section for receiving the mounting shaft (15), preferably for receiving it in a releasable and/or rotationally movable manner.

6. Seat bench arrangement (10) according to one of Claims 3 to 5, **characterized in that** the mounting shaft (15) comprises one or more mounting elements (16), in particular elastic seat bench buffers, which are arranged on the mounting shaft (15).

7. Seat bench arrangement (10) according to Claim 6, **characterized in that** the mounting elements (16) are in each case of cylindrical configuration and are arranged coaxially with respect to an axis of symmetry of the mounting shaft (15).

8. Seat bench arrangement (10) according to one of Claims 1 to 7, **characterized in that** the second connecting portion (11b) is arranged on a side of the tank mounting (11), which side faces away from the first connecting portion (11a).

9. Seat bench arrangement (10) according to one of Claims 1 to 8, **characterized in that** the first (11a) and/or the second connecting portion (11b) are/is configured in one piece with the tank mounting (11).

10. Seat bench arrangement (10) according to one of Claims 1 to 9, **characterized in that** the tank mounting (11) comprises, moreover, a fastening portion (17), preferably at least one eyelet, which is configured for fastening a luggage container to the tank mounting (11) in a region above the fuel cell (12).

11. Seat bench arrangement (10) according to one of Claims 1 to 10, **characterized in that** the third connecting portion (13a) is arranged in a front region (13b) of the seat bench (13), which front region (13b) faces the tank mounting (11).

12. Motorcycle (1) with a seat bench arrangement (10), **characterized in that** the seat bench arrangement (10) is configured according to one of Claims 1 to 11, and the tank mounting (11) is connected fixedly to the vehicle structure (2).

## Revendications

1. Ensemble siège (10) pour une motocyclette (1), comprenant
- une vessie de réservoir (12),
- un palier de réservoir (11), lequel est réalisé pour relier la vessie de réservoir (12) à une structure de véhicule (2), et
- un siège (13) servant à la réception d'un utilisateur de la motocyclette, le siège (13) étant relié au palier de réservoir (11), de sorte que le palier de réservoir (11) forme un palier servant à supporter le siège (13), le palier de réservoir (11) comprenant une première partie de liaison (11a), qui est réalisée pour la liaison à la vessie de réservoir (12), et une deuxième partie de liaison (11b), le siège (13) étant relié à la deuxième partie de liaison (11b) du palier de réservoir (11) au moyen d'une troisième partie de liaison (13a) associée au siège (13), **caractérisé en ce que** la première partie de liaison (11a) est reliée par complémentarité de formes à la vessie de réservoir (12), le palier de réservoir (11) présentant, dans la région de la première partie de liaison (11a), des évidements et/ou des contre-dépouilles, dans lesquel(le)s la vessie de réservoir (12) s'étend pour la formation de l'engagement par complémentarité de formes lors d'une fabrication de la vessie de réservoir (12) à l'aide d'un processus de soufflage.

2. Ensemble siège (10) selon la revendication 1, **caractérisé en ce que** la troisième partie de liaison (13a) est reliée de manière rotative à la deuxième partie de liaison (11b) du palier de réservoir (11), afin de relier le siège (13) au palier de réservoir (11) de manière mobile en rotation.

3. Ensemble siège (10) selon l'une des revendications 1 et 2, **caractérisé en ce que** la deuxième partie de liaison (11b) comprend un logement (14) et la troisième partie de liaison (13a) comprend un arbre de palier (15), l'arbre de palier (15) étant disposé dans le logement (14), de préférence disposé de manière amovible et/ou de manière mobile en rotation.

4. Ensemble siège (10) selon l'une des revendications 1 et 2, **caractérisé en ce que** la deuxième partie de liaison (11b) comprend un arbre de palier (15) et la troisième partie de liaison (13a) comprend un logement (14), l'arbre de palier (15) étant disposé dans le logement (14), de préférence disposé de manière amovible et/ou de manière mobile en rotation.

5. Ensemble siège (10) selon l'une des revendications 3 et 4, **caractérisé en ce que** le logement (14) respectif est réalisé sous forme d'évidement, de contre-dépouille et/ou avec une section transversale en forme de U pour recevoir, de préférence pour recevoir de manière amovible et/ou de manière mobile en rotation, l'arbre de palier (15) .

6. Ensemble siège (10) selon l'une des revendications 3 à 5, **caractérisé en ce que** l'arbre de palier (15) comprend un ou plusieurs éléments de palier (16) disposés sur l'arbre de palier (15), en particulier des tampons de siège élastiques.

7. Ensemble siège (10) selon la revendication 6, **caractérisé en ce que** les éléments de palier (16) sont réalisés respectivement de manière cylindrique et sont disposés de manière coaxiale par rapport à un axe de symétrie de l'arbre de palier (15).

8. Ensemble siège (10) selon l'une des revendications 1 à 7, **caractérisé en ce que** la deuxième partie de liaison (11b) est disposée sur un côté du palier de réservoir (11) opposé à la première partie de liaison (11a).

9. Ensemble siège (10) selon l'une des revendications 1 à 8, **caractérisé en ce que** la première (11a) et/ou la deuxième partie de liaison (11b) est/sont réalisée(s) d'une seule pièce avec le palier de réservoir (11).

10. Ensemble siège (10) selon l'une des revendications 1 à 9, **caractérisé en ce que** le palier de réservoir (11) comprend en outre une partie de fixation (17), de préférence au moins un œillet, lequel est réalisé pour la fixation d'un contenant formant bagage au palier de réservoir (11) dans une région au-dessus de la vessie de réservoir (12).

11. Ensemble siège (10) selon l'une des revendications 1 à 10, **caractérisé en ce que** la troisième partie de liaison (13a) est disposée dans une région avant (13b), tournée vers le palier de réservoir (11), du siège (13).

12. Motocyclette (1) comprenant un ensemble siège (10), **caractérisée en ce que** l'ensemble siège (10) est réalisé selon l'une des revendications 1 à 11 et le palier de réservoir (11) est relié solidement à la structure de véhicule (2).
